# EUROPÄISCHE PATENTANMELDUNG

(11) **EP 1 428 994 A1**
(43) Veröffentlichungstag der Anmeldung: **16.06.2004**
(21) Anmeldenummer: 03024745.6
(22) Anmeldetag: 29.10.2003
(51) Int. Cl.: F01N 7/18, F16L 27/10

(54) **Einrichtung zur Schwingungsentkopplung und/oder zur Längenkompensation und/oder zur Kompensation eines seitlichen Versatzes**

(30) Priorität: 13.12.2002 AT 18632002
(71) Anmelder: GE Jenbacher GmbH & Co. OHG, 6200 Jenbach (AT)
(72) Erfinder: Stauder, Kurt, 6200 Jenbach (AT); Schäffert, Peter, 6200 Buch bei Jenbach (AT)
(74) Vertreter: Torggler, Paul Norbert, Dr.

(57) **Zusammenfassung**

Einrichtung zur Schwingungsentkopplung und/oder zur Längenkompensation und/oder zur Kompensation eines seitlichen Versatzes in fluiddurchströmten Leitungen mit einem zumindest teilweise elastischen Leitungsabschnitt (3) und einem im wesentlichen starren Leitungsabschnitt (1), wobei der im wesentlichen starre Leitungsabschnitt (1) ein offenes Ende (2) mit in Richtung zum offenen Ende (2) hin variierender Querschnittsfläche aufweist, wobei das offene Ende (2) in den zumindest teilweise elastischen Leitungsabschnitt (3) frei hineinragt, und der teilweise elastische Leitungsabschnitt (3) mit dem im wesentlichen starren Leitungsabschnitt (1) mit Abstand von dessen offenem Ende (2) fluiddicht verbunden ist, wobei der Leitungsquerschnitt der Einrichtung an ihren beiden Enden unterschiedlich groß ist.

## Beschreibung

Die vorliegende Erfindung betrifft eine Einrichtung zur Schwingungsentkopplung und/oder zur Längenkompensation und/oder zur Kompensation eines seitlichen Versatzes in fluiddurchströmten Leitungen mit einem zumindest teilweise elastischen Leitungsabschnitt und einem im wesentlichen starren Leitungsabschnitt, wobei der im wesentlichen starre Leitungsabschnitt ein offenes Ende mit in Richtung zum offenen Ende hin variierender Querschnittsfläche aufweist, wobei das offene Ende in den zumindest teilweise elastischen Leitungsabschnitt frei hineinragt, und der teilweise elastische Leitungsabschnitt mit dem im wesentlichen starren Leitungsabschnitt mit Abstand von dessen offenem Ende fluiddicht verbunden ist.

Beim Stand der Technik ist es bekannt in fluidführenden Leitungen, elastische Leitungsabschnitte und starre Leitungsabschnitte hintereinander anzuordnen, um eine Schwingungsentkopplung und/oder Längenkompensation zu erreichen. Derartige Anordnungen werden zum Beispiel bei stationären Verbrennungsmotoren an den Auslässen von Turboladern angeordnet. Gattungsgemäße Einrichtungen können sowohl von Gasen als auch von Flüssigkeiten durchströmt werden.

Aus der EP 0921283 A2 wie auch aus der US 5,437,479 ist es des Weiteren bekannt, den im wesentlichen starren Leitungsabschnitt zumindest teilweise in den zumindest teilweise elastischen Leitungsabschnitt hineinzuverlagern. Hierdurch wird eine Verkürzung der Gesamtbaulänge erreicht. Der im wesentlichen starre Leitungsabschnitt wird beim Stand der Technik im Bereich innerhalb des zumindest teilweise elastischen Leitungsabschnitts so weit nötig verjüngt, um das Ineinanderfügen dieser Bauteile zu ermöglichen.

Aufgabe der Erfindung ist es, eine solche Einrichtung dahingehend zu verbessern, dass sie besonders gut auch Düsen- oder Diffusorfunktion übernehmen kann.

Dies wird erfindungsgemäß erreicht, indem der Leitungsquerschnitt der Einrichtung an ihren beiden Enden unterschiedlich groß ist.

Durch die erfindungsgemäßen unterschiedlichen Leitungsquerschnitte an beiden Seiten der Einrichtung ist es möglich, den Leitungsquerschnitt des im wesentlichen starren Leitungsabschnitts innerhalb des zumindest teilweise elastischen Leitungsabschnitts so stark zu reduzieren oder zu erweitern, dass eine besonders gute Düsen- oder Diffusorwirkung bei gleichzeitig kurzer Baulänge der Einrichtung erreicht wird, wodurch die Strömung eines Fluides (Gas und/oder Flüssigkeit) in der Einrichtung gezielt beeinflusst wird. Unter Querschnitt ist die Querschnittsfläche senkrecht zur Längserstreckung der Leitung zu verstehen.

Eine einfache Variante sieht hierbei vor, dass der im wesentlichen starre Leitungsabschnitt zumindest bereichsweise trichterförmig ausgebildet ist.

Im Sinne einer optimalen Schwingungsentkopplung ist vorgesehen, dass das offene Ende des im wesentlichen starren Leitungsabschnittes frei in den zumindest teilweise elastischen Leitungsabschnitt hineinragt und diesen somit nicht berührt. Die Verbindung der beiden Leitungsabschnitte in einem vom offenen Ende des im wesentlichen starren Leitungsabschnittes beabstandeten Bereich kann durch die Verwendung von Schellen, durch Verkleben, Verschweißen oder dergleichen erfolgen. Die erfindungsgemäße Einrichtung kann sowohl von Gasen als auch von Flüssigkeiten durchströmt werden. Ein bevorzugter Einsatzbereich der Erfindung ist ihre Anordnung am Austritt der Turbine eines Turboladers bei Verbrennungsmotoren, wie zum Beispiel stationären Gasmotoren. Durch die erfindungsgemäß erzielte kompakte Bauweise wird zusätzlich zum reduzierten Platzbedarf auch erreicht, dass die erfindungsgemäße Einrichtung auch bei Verwendung von dünnwandigen Leitungen für den im wesentlichen starren und/oder den zumindest teilweise elastischen Leitungsabschnitt stabil ausgeführt ist, ohne dass weitere Versteifungshilfen notwendig sind.

In einer Anordnung mit einer Zuleitung und einer weiterführenden Leitung und einer dazwischen angeordneten erfindungsgemäßen Einrichtung ist günstigerweise vorgesehen, dass die Zuleitung und die weiterführende Leitung eine zueinander unterschiedliche Innenquerschnittsfläche aufweisen. Hierbei kann die Einrichtung mit der Zuleitung und der weiterführenden Leitung über Flansche lösbar oder aber auch mit diesen Leitungen fix verbunden sein.

Im Sinne einer maximalen Reduzierung des Platzbedarfs, ist es günstig, wenn der im wesentlichen starre Leitungsabschnitt möglichst weit in den zumindest teilweise elastischen Leitungsabschnitt hineinragt. So kann einerseits vorgesehen sein, dass der zumindest teilweise elastische Leitungsabschnitt längserstreckt ist und der im wesentlichen starre Leitungsabschnitt über mindestens 60%, vorzugsweise über mindestens 85%, der gesamten Längserstreckung des zumindest teilweise elastischen Leitungsabschnitts in diesen hineinragt. Andererseits ist es auch möglich, dass der zumindest teilweise elastische Leitungsabschnitt längserstreckt ist und der im wesentlichen starre Leitungsabschnitt im wesentlichen über die gesamte Längserstreckung des zumindest teilweise elastischen Leitungsabschnitts in diesen hineinragt. In dieser Variante ragt der im wesentlichen starre Leitungsabschnitt über mindestens 90%, vorzugsweise zu 100%, der gesamten Längserstreckung des zumindest teilweise elastischen Leitungsabschnitts in diesen hinein. In dieser zuletzt genannten Konfiguration verhindert der im wesentlichen starre Leitungsabschnitt, dass das durchströmende Fluid mit dem zumindest teilweise elastischen Leitungsabschnitt in direkten Kontakt kommt, und übernimmt somit eine zusätzliche Schutzfunktion. Ein vorzeitiger Verschleiß des zumindest teilweise elastischen Leitungsabschnitts, zum Beispiel durch thermische Belastung oder kurzzeitigen Druckanstieg, ist verhindert. Darüber hinaus wirkt der Bereich zwischen dem zumindest teilweise elastischen und dem im wesentlichen starren Leitungsabschnitt auch als thermischer Isolator. Dies ist besonders günstig, wenn heiße Fluide die Einrichtung durchströmen.

Weitere Merkmale und Einzelheiten der vorliegenden Erfindung ergeben sich aus der nachfolgenden Figurenbeschreibung. Dabei zeigt:
- Fig. 1: einen Längsschnitt durch ein erfindungsgemäßes Ausführungsbeispiel in Form eines Diffusors mit Axialkompensator
- Fig. 2: das in Fig. 1 gezeigte Ausführungsbeispiel in einer perspektivischen Ansicht,
- Fig. 3: ein weiteres, am Ausgang einer Turbine angeordnetes Ausführungsbeispiel und
- Fig. 4: einen Längsschnitt durch ein erfindungsgemäßes Ausführungsbeispiel in Form einer Düse mit Axialkompensator.

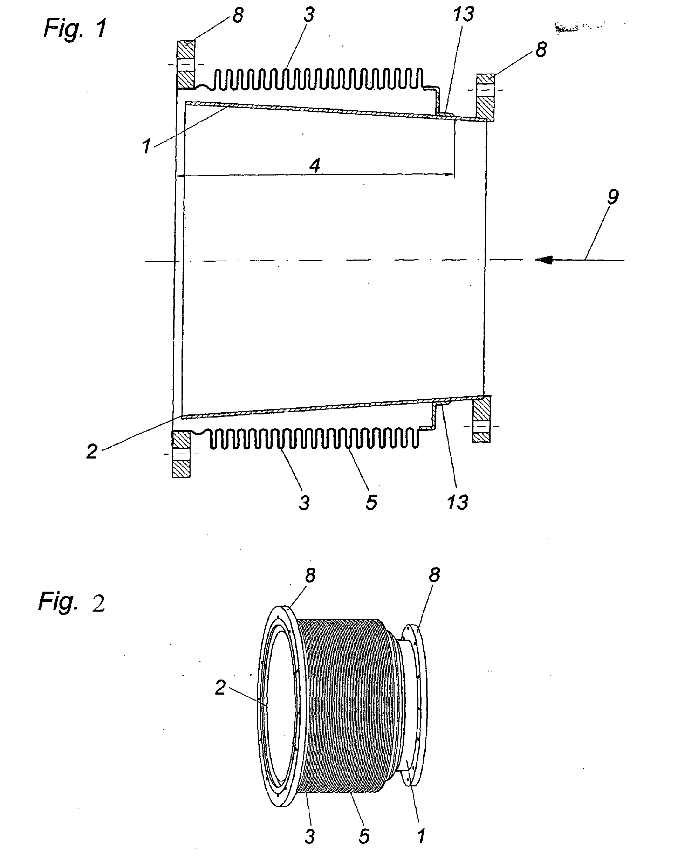

In Fig. 1 ist eine erfindungsgemäße Einrichtung als Kombination eines Axialkompensators und eines Leitungsdiffusors in einem Bauteil gezeigt. Hierbei ist der im wesentlichen starre Leitungsabschnitt 1 als Diffusor ausgebildet. Das bedeutet, dass er zu seinem offenen Ende 2 hin, einen sich weitenden Querschnitt aufweist. Der im wesentlichen starre Leitungsabschnitt 1 ragt über nahezu die gesamte Längserstreckung 4 des, zumindest teilweise elastischen Leitungsabschnitts 3 in diesen hinein. Der Leitungsabschnitt 3 weist in der gezeigten bevorzugten Ausführungsform einen Faltenbalg 5 , welcher eine Längenkompensation, eine Kompensation eines seitlichen Versatzes und auch eine Schwingungsentkopplung ermöglicht, auf. Beide Leitungsabschnitte 1 und 3 weisen im gezeigten Beispiel jeweils einen Befestigungsflansch 8 auf. Die Flansche 8 dienen der Befestigung der erfindungsgemäßen Einrichtung in oder an Leitungssystemen, zum Beispiel durch Verschrauben. An Stelle der Flansche können auch andere Steck-, Klemm- oder Schraubenverbindungen vorgesehen sein, wenn ein einfaches Austauschen der Einrichtung möglich sein soll. Ist ein gelegentliches Austauschen der Einrichtung nicht notwendig, so kann die Einrichtung auch fix, zum Beispiel mittels Verschweißen, in das übrige Leitungssystem eingebunden sein. Die Verbindung von dem im wesentlichen starren Leitungsabschnitt 1 mit dem zumindest bereichsweise elastischen Leitungsabschnitt 3, erfolgt außerhalb des offenen Endes 2 des im wesentlichen starren Leitungsabschnittes 1 im Verbindungsbereich 13. Diese fluiddichte Verbindung kann durch Schweißen, Kleben, die Verwendung von Manschetten oder dergleichen erfolgen.

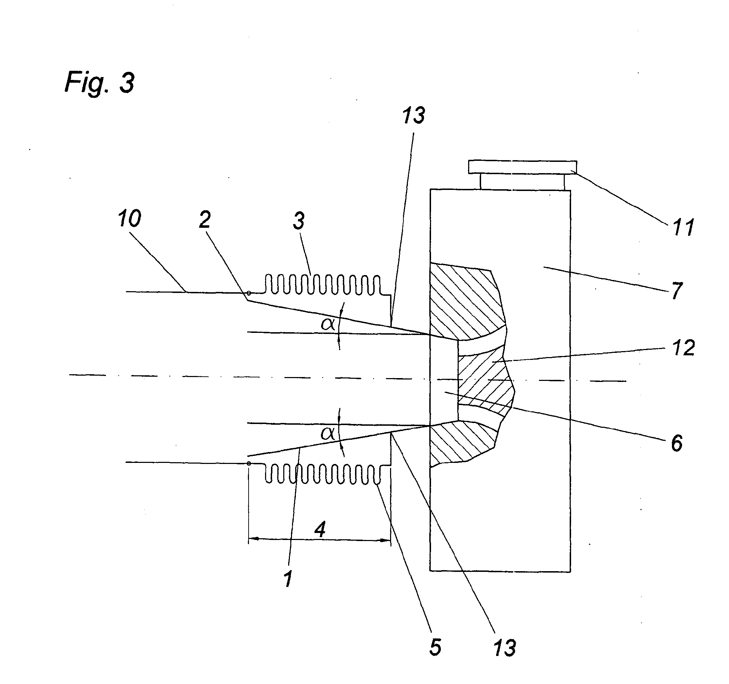

Fig. 3 zeigt ein erfindungsgemäßes Ausführungsbeispiel welches am Ausgang 6 einer Turbine 7 angeordnet ist. Die Turbine 7 kann Teil eines Turboladers eines Verbrennungsmotors sein. Sie weist ein Turbinenlaufrad 12 sowie einen Turbineneintritt 11 auf. Beim gezeigten Ausführungsbeispiel ist vorgesehen, dass die Einrichtung mit ihrem im wesentlichen starren Leitungsabschnitt 1 am Ausgang 6 der Turbine 7 angeordnet ist, während der zumindest teilweise elastische Leitungsabschnitt 3 an der weiterführenden Leitung 10 angeordnet ist. Die Einrichtung kann darüber hinaus auch am Eingang einer Turbine oder anderswo im Leitungssystem 10 angeordnet sein. Die Verwendung der Einrichtung ist nicht auf die gezeigten Ausführungsbeispiele beschränkt. Sie kann vielmehr in nahezu allen fluiddurchströmten Leitungssystemen verwendet werden, in denen eine Schwingungsentkopplung und/oder Längenkompensation und/oder ein Ausgleich eines seitlichen Versatzes gewünscht ist. In den gezeigten Ausführungsbeispielen durchströmt das Fluid die Einrichtungen in Richtung 9, sodass der im wesentlichen starre Leitungsabschnitt 1 sich weitet und als Diffusor wirkt.

Bei der Montage der erfindungsgemäßen Einrichtung am Austritt der Turbine eines Abgasturboladers, werden durch den Diffusor optimale Strömungsverhältnisse schon direkt am Turbinenaustritt 6 erreicht. Darüber hinaus bewirkt die erfindungsgemäße Ausführungsform eine Reduzierung der montierten Masse am Turbinengehäuse und damit weniger mechanische Belastung des Gehäuses. Durch die Reduzierung der montierten Massen am Turbinengehäuse, wird darüber hinaus auch die Schwingungsbelastung am Turbolader reduziert.

Um keine unnötigen Strömungsverluste durch die erfindungsgemäße Einrichtung zu erzeugen, ist günstigerweise, vor allem bei der Ausbildung des im wesentlich starren Leitungsabschnitts 1 als Diffusor, vorgesehen, dass seine Querschnittsfläche sich mit nur geringem Winkel α zu seinem offenen Ende 2 hin öffnet (bzw. schließt bei der Ausbildung als Düse). Strömungsgünstig ist es des Weiteren, wenn der Durchmesser am offenen Ende 2 nur etwas kleiner als der nachfolgende Rohrdurchmesser der Leitung 10 bzw. der Innendurchmesser des zumindest teilweise elastischen Leitungsabschnitts 3 in diesem Bereich ist.

Der Winkel α, mit dem der im wesentlichen starre Leitungsabschnitt 1 sich zu seinem offenen Ende 2 hin öffnet oder schließt, ist gegebenenfalls auch durch andere Randbedingungen, wie zum Beispiel dem Öffnungswinkel am Turbinenausgang 6 vorgegeben.

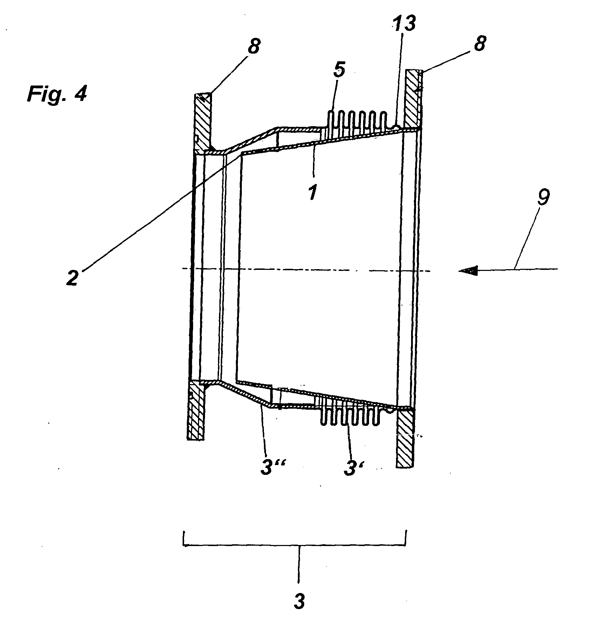

Kehrt man die Strömungsrichtung um, so wird aus der erfindungsgemäßen Einrichtung eine Kombination von Kompensator (teilweise elastischem Leitungsabschnitt 3) und Düse, wie sie in Fig. 4 dargestellt ist, indem der im wesentlichen starre Leitungsabschnitt 1 dann einen sich zu seinem offenen Ende 2 hin verengenden Querschnitt aufweist, und als Düse arbeitet.

Der Leitungsquerschnitt am Düseneingang ist größer als die gegenüberliegende Austrittsöffnung der Einrichtung, wobei Eintritt und Austritt durch die mit dem Pfeil 9 gezeigte Strömungsrichtung definiert sind. Bei dem Ausführungsbeispiel gemäß Fig. 4 ist darüber hinaus verdeutlicht, dass der zumindest teilweise elastische Leitungsabschnitt 3 im allgemeinen auch aus einem elastischen Abschnitt 3' (Faltenbalg 5) und einem starren Abschnitt 3" zusammengesetzt sein kann. Darüber hinaus bieten sich natürlich auch noch andere Mischformen an. Wichtig ist lediglich, dass der zumindest teilweise elastische Leitungsabschnitt 3 insgesamt die notwendige Elastizität aufweist.

Sowohl der im wesentlichen starre Leitungsabschnitt 1 als auch der zumindest teilweise elastische Leitungsabschnitt 3 können aus Metall, vorzugsweise aus Stahl, aber auch aus anderen Werkstoffen gefertigt sein. Hierbei ist jedoch immer darauf zu achten, dass für den zumindest teilweise elastischen Leitungsabschnitt, zumindest bereichsweise elastisches Material und für den im wesentlichen starren Leitungsabschnitt auch im wesentlichen starres Material verwendet wird. Für den zumindest teilweise elastischen Abschnitt kann auch elastischer Kunststoff verwendet werden, wenn dies die thermischen und anderweitigen Bedingungen zulassen.

Die Länge und Breite des zumindest teilweise elastischen Leitungsabschnitts 3 bzw. des Faltenbalgs 5 ist an den benötigten Kompensationsweg in Längs- und in Querrichtung anzugleichen. Durch geeignete Wahl der Abstände zwischen dem im wesentlichen starren und dem zumindest teilweise elastischen Leitungsabschnitt ist darauf zu achten, dass gleichzeitig ein ausreichender Ausgleich eines seitlichen Versatzes quer zur und in Richtung der Strömungsrichtung 9 (in Längsrichtung) möglich ist. Üblicherweise beträgt diese Bewegungsfreiheit quer zur Strömungsrichtung 9 zwischen 2% und 10% des möglichen Kompensationsweges in Strömungsrichtung. Generell ist im Sinne der Schwingungsentkopplung darauf zu achten, dass das offene Ende 2 auch bei maximal möglichem Querversatz und/oder Längsversatz nicht den zumindest teilweise elastischen Leitungsabschnitt 3 berührt.

## Patentansprüche

1. Einrichtung zur Schwingungsentkopplung und/oder zur Längenkompensation und/oder zur Kompensation eines seitlichen Versatzes in fluiddurchströmten Leitungen mit einem zumindest teilweise elastischen Leitungsabschnitt und einem im wesentlichen starren Leitungsabschnitt, wobei der im wesentlichen starre Leitungsabschnitt ein offenes Ende mit in Richtung zum offenen Ende hin variierender Querschnittsfläche aufweist, wobei das offene Ende in den zumindest teilweise elastischen Leitungsabschnitt frei hineinragt, und der teilweise elastische Leitungsabschnitt mit dem im wesentlichen starren Leitungsabschnitt mit Abstand von dessen offenem Ende fluiddicht verbunden ist, **dadurch gekennzeichnet, dass** der Leitungsquerschnitt der Einrichtung an ihren beiden Enden unterschiedlich groß ist.

2. Einrichtung nach Anspruch 1, **dadurch gekennzeichnet, dass** der im wesentlichen starre Leitungsabschnitt (1) zumindest bereichsweise trichterförmig ausgebildet ist.

3. Einrichtung nach Anspruch 1 oder 2, **dadurch gekennzeichnet, dass** der zumindest teilweise elastische Leitungsabschnitt (3) längserstreckt ist und der im wesentlichen starre Leitungsabschnitt (1) über mindestens 60%, vorzugsweise über mindestens 85%, der gesamten Längserstreckung (4) des zumindest teilweise elastischen Leitungsabschnitts (3) in diesen hineinragt.

4. Einrichtung nach Anspruch 1 oder 2, **dadurch gekennzeichnet, dass** der zumindest teilweise elastische Leitungsabschnitt (3) längserstreckt ist und der im wesentlichen starre Leitungsabschnitt (1) im wesentlichen über die gesamte Längserstreckung (4) des zumindest teilweise elastischen Leitungsabschnitts (3) in diesen hineinragt.

5. Einrichtung nach einem der Ansprüche 1 bis 4, **dadurch gekennzeichnet, dass** der im wesentlichen starre Leitungsabschnitt (1) zu seinem offenen Ende (2) hin einen sich weitenden Querschnitt aufweist, vorzugsweise ein Diffusor ist.

6. Einrichtung nach einem der Ansprüche 1 bis 4, **dadurch gekennzeichnet, dass** der im wesentlichen starre Leitungsabschnitt (1) zu seinem offenen Ende (2) hin einen sich verengenden Querschnitt aufweist, vorzugsweise eine Düse ist.

7. Einrichtung nach einem der Ansprüche 1 bis 6, **dadurch gekennzeichnet, dass** der zumindest teilweise elastische Leitungsabschnitt (3) einen Faltenbalg (5) aufweist.

8. Einrichtung nach einem der Ansprüche 1 bis 7, **dadurch gekennzeichnet, dass** die Einrichtung, vorzugsweise mit ihrem im wesentlichen starren Leitungsabschnitt (1) am Eingang oder Ausgang (6) einer Turbine (7), eines Turboladers oder dergleichen anordenbar ist.

9. Einrichtung nach einem der Ansprüche 1 bis 8, **dadurch gekennzeichnet, dass** am im wesentlichen starren Leitungsabschnitt (1) und/oder am zumindest teilweise elastischen Leitungsabschnitt (3) ein Befestigungsflansch (8) angeordnet ist.

10. Einrichtung nach einem der Ansprüche 1 bis 9, **dadurch gekennzeichnet, dass** der im wesentlichen starre Leitungsabschnitt (1) im wesentlichen aus Metall, vorzugsweise aus Stahl besteht.

11. Einrichtung nach einem der Ansprüche 1 bis 10, **dadurch gekennzeichnet, dass** der zumindest teilweise elastische Leitungsabschnitt (3) elastisches Metall, vorzugsweise elastischen Stahl, und/oder elastischen Kunststoff aufweist.

12. Anordnung mit einer Zuleitung und einer weiterführenden Leitung und einer dazwischen angeordneten Einrichtung nach einem der Ansprüche 1 bis 11, **dadurch gekennzeichnet, dass** die Zuleitung und die weiterführende Leitung (10) eine zueinander unterschiedliche Innenquerschnittsfläche aufweisen.
